# NOUVEAU FASCICULE DE BREVET EUROPEEN

(11) **EP 1 382 900 B2**
(45) Date de publication et mention de la décision concernant l'opposition: **21.10.2009**
(45) Mention de la délivrance du brevet: 19.10.2005
(21) Numéro de dépôt: 03291723.9
(22) Date de dépôt: 10.07.2003
(51) Int. Cl.: F21S 8/10, B60Q 1/14

(54) **Projecteur de véhicule automobile avec lampe à deux filaments**
Kraftfahrzeugscheinwerfer mit einer Zweifadenlampe
Motor vehicle headlamp with a double filament lamp

(30) Priorité: 15.07.2002 FR 0208936
(43) Date de publication de la demande: 21.01.2004
(73) Titulaire: VALEO VISION, 93012 Bobigny Cedex (FR)
(72) Inventeur: Pauty, Etienne, 75019 Paris (FR); Pierre, Bernard, 93000 Bobigny (FR)
(74) Mandataire: Renous Chan, Véronique

(56) Documents cités:
- EP-A- 0 581 679
- EP-A- 1 089 324
- EP-A1- 0 684 420
- EP-A2- 0 791 779
- DE-A1- 3 533 117
- FR-A- 2 782 149
- UNITED NATIONS: 'Agreement concerning the adoption of uniform technical prescriptions for wheeled vehicles, equipment and parts which can be fitted and/or be used on wheeled vehicles and the conditions for reciprocal recognition of approvals granted on the basis of these' ECE REGULATIONS 87 03 Décembre 2003, GENEVA,
- UNITED NATIONS: 'Agreement concerning the adoption of uniform technical prescriptions for wheeles vehicles, equipment and parts which can be fitted and/or be used on wheeled vehicles and the conditions for reciprocal recognition of approvals granted on the basis of these' ECE REGULATIONS NO. 48 20 Mars 2001, GENEVA,
- UNITED NATIONS: 'Agreement concerning the adoption of uniform conditions of approval and reciprocal recognition of approval for motor vehicle equipment and parts' ECE REGULATION NO. 87 30 Mars 1993, GENEVA,

## Description

L'invention est relative à un projecteur de véhicule automobile du genre de ceux qui comprennent : une lampe à deux filaments, à savoir un premier filament équipé d'une coupelle qui ne laisse passer la lumière que suivant une étendue angulaire donnée, et un second filament libre de toute coupelle; un réflecteur avec une première zone réfléchissante prévue essentiellement pour coopérer avec le premier filament et produire un premier type de faisceau lumineux, et une seconde zone réfléchissante, située dans l'ombre de la coupelle, prévue pour coopérer avec le second filament et pour former, éventuellement avec la première zone réfléchissante, un deuxième type de faisceau lumineux; et une glace de fermeture du réflecteur.

Un tel projecteur est connu et équipé, en particulier, d'une lampe normalisée de type "H4", ou analogue. La lampe "H4" est prévue pour, en général, produire au choix un faisceau de route ou un faisceau de croisement délimité par une coupure, dite coupure européenne à profil en V aplati, présentant du côté du croisement un bord horizontal, et de l'autre côté un bord montant suivant un angle α de 15° par rapport à l'horizontale.

Il est également connu, notamment d'après EP 0 581 679 qui divulgue le préambule de la revendication 1, de réaliser un projecteur bifonction route-antibrouillard dans lequel la lampe de type "H4" est décalée angulairement autour de son axe d'une valeur égale à α/2 par rapport à celle qu'elle occupe dans un projecteur classique route-code, ou est translatée vers le haut.

L'évolution des exigences en matière de signalisation des véhicules automobiles, notamment le règlement sur les feux diurnes de la Communauté Européenne intitulé "ECE regulation R87: Daytime Running Lamp" désigné ci-après par l'abréviation DRL, pose problème en matière de réalisation d'une telle fonction DRL.

Une première solution admise pour assurer cette fonction DRL ou "feu diurne" consiste à allumer en permanence les feux de croisement (codes), comme les pays scandinaves le pratiquent actuellement. Toutefois, en procédant de la sorte, on augmente la consommation d'énergie de façon non négligeable, et on réduit la durée de vie des lampes. La photométrie du feu de croisement, tolérée pour cette fonction, n'est cependant pas la photométrie spécifique de la fonction DRL.

La photométrie de la fonction DRL est relativement différente de celle des autres fonctions d'éclairage assurées par les projecteurs de véhicules automobiles. En particulier, le faisceau DRL doit être relativement épais suivant l'axe optique, avec une intensité lumineuse plus faible que pour les feux de route ou de croisement.

Il est possible de prévoir un feu diurne DRL spécifique, mais dans ce cas il faut ajouter à l'avant du véhicule, notamment dans le bouclier, une cavité respectant le règlement R87. Actuellement, la surface éclairante exigée pour la fonction DRL est de 40 cm² et il n'est pas toujours aisé dans les véhicules modernes de trouver un emplacement pour une telle surface éclairante.

Ces diverses exigences pour la fonction DRL apparaissent donc difficiles à concilier avec une autre fonction classique d' un projecteur de véhicule automobile.

L'invention a surmonté ces difficultés et préjugés, et a permis de réaliser la fonction DRL avec un projecteur de véhicule automobile qui assure également une fonction antibrouillard.

Selon l'invention, un projecteur de véhicule automobile du genre défini précédemment, est caractérisé par le fait que l'un des filaments de la lampe est prévu pour fonctionner sous une puissance électrique réduite relativement à celle de l'autre filament et est affecté à la fonction feu diurne (DRL), que le réflecteur est conçu pour assurer avec la zone réfléchissante affectée à ce filament de puissance réduite au moins une partie de la photométrie DRL, et que le projecteur a une surface éclairante au moins égale à celle nécessaire pour la fonction DRL.

La zone réfléchissante du réflecteur affectée à la fonction autre que DRL est conçue de manière à ne pas conduire à des valeurs supérieures au maximum autorisé en DRL.

Dans le cas d'une lampe à deux filaments qui ont sensiblement la même puissance sous une même tension ( ce qui est le cas d'une lampe de type "H4"), le filament affecté à la fonction DRL produirait, sous la tension nominale appliquée à l'autre filament , une puissance supérieure à celle souhaitée ; selon l'invention, le filament affecté à la fonction DRL est sous-volté , pour produire la puissance souhaitée.

Selon une autre possibilité, la lampe à deux filaments est conçue de telle sorte que le filament servant à la fonction DRL a une puissance réduite sous la tension nominale, égale à celle appliquée à l'autre filament. En particulier, la puissance pour la fonction DRL est au plus égale au tiers de la puissance de l'autre filament. A titre d'exemple non limitatif, le filament DRL a une puissance de 16 W sous la tension nominale, tandis que l'autre filament a une puissance de 65 W sous la même tension nominale.

Le projecteur de véhicule peut assurer la fonction DRL et la fonction antibrouillard; le premier filament avec coupelle placée au-dessous est affecté à la fonction antibrouillard et la partie haute du réflecteur est conçue pour cette fonction, tandis que le deuxième filament est affecté à la fonction DRL et la partie basse du réflecteur est conçue pour cette fonction, assurée éventuellement en liaison avec la partie haute du réflecteur.

En effet, la partie haute du réflecteur peut être prévue pour remplir à la fois la photométrie de l'antibrouillard et une partie de la fonction DRL, essentiellement celle située au-dessus du plan horizontal, la partie basse du réflecteur étant optimisée pour remplir la photométrie complémentaire de la fonction DRL.

Avantageusement, la partie basse du réflecteur comprend deux zones latérales d'extrémité prévues pour renvoyer la lumière vers le haut et vers le centre du faisceau DRL. De préférence, l'une des zones latérales renvoie la lumière vers le haut sous un angle d'environ 5° par rapport à l'axe optique, et l'autre zone latérale extrême renvoie la lumière vers le haut sous un angle d'environ 10° par rapport à l'axe optique.

La coupure du faisceau antibrouillard au-dessus d'un plan horizontal peut être assurée par le réflecteur dont le foyer de la partie haute est situé en arrière du premier filament avec coupelle associé à la fonction antibrouillard.

En assurant les divers faisceaux lumineux par le réflecteur, on peut prévoir une glace entièrement lisse qui n'intervient pas, par exemple par des stries, sur la configuration des faisceaux.

L'invention consiste, mises à part les dispositions exposées ci-dessus, en un certain nombre d'autres dispositions dont il sera plus explicitement question ci-après à propos d'un exemple de réalisation décrit en détail avec référence aux dessins annexés, mais qui n'est nullement limitatif. Sur ces dessins :
Fig.1 est une vue schématique en coupe verticale d'un projecteur assurant la fonction DRL et une fonction antibrouillard selon l'invention.
Fig.2 est une coupe schématique à plus grande échelle suivant la ligne II-II de Fig.1 de la coupelle du premier filament.
Fig.3 est une vue arrière du réflecteur avec les différentes zones réfléchissantes.
Fig.4 est une vue arrière de la seule partie haute du réflecteur.
Fig.5 est une vue arrière de la seule partie basse du réflecteur, sans les deux zones extrêmes latérales.
Fig.6 est une vue arrière des deux seules zones extrêmes latérales de la partie basse réfléchissante.
Fig.7 est une coupe schématique verticale du réflecteur illustrant la fonction DRL.
Fig.8 est une coupe schématique par un plan horizontal, passant par l'axe optique, illustrant la contribution de la partie haute réfléchissante à la fonction DRL.
Fig.9 illustre la photométrie de la fonction antibrouillard.
Figs.10 à 12 illustrent la photométrie de trois composantes pour la fonction DRL obtenues avec les parties différentes du réflecteur montrées respectivement sur les Figs. 4 à 6.
Fig.13 enfin illustre la photométrie complète DRL produite par l'ensemble des composantes des Fig.10 à 12.

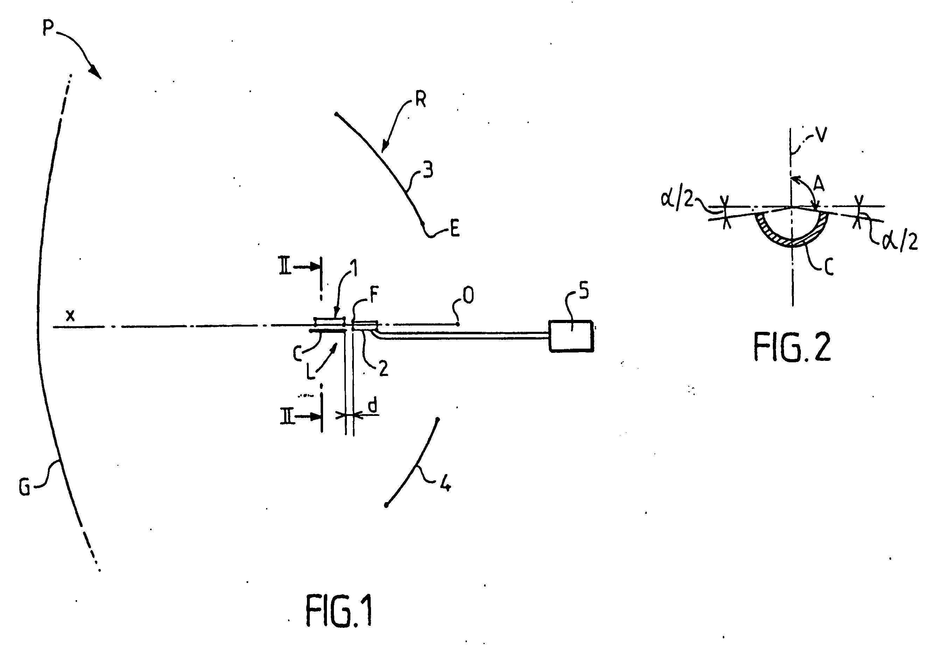

En se reportant à Fig.1 on peut voir une coupe verticale schématique d'un projecteur P de véhicule automobile comprenant une lampe L à deux filaments, à savoir un premier filament 1 équipé d'une coupelle C qui ne laisse passer la lumière que suivant une étendue angulaire donnée, et un second filament 2 libre de toute coupelle.

La lampe L, dans l'exemple considéré, est une lampe normalisée dite H4. Le filament 1 est situé en avant du filament 2, les deux filaments étant généralement cylindriques d'axe respectif parallèle à l'axe optique Ox du projecteur. Les filaments 1, 2 sont en outre décalés en hauteur l'un par rapport à l'autre. Le filament 1 est disposé immédiatement au-dessus de l'axe optique Ox, tangentiellement à cet axe, tandis que le filament 2 est traversé par l'axe Ox ou est situé au-dessous de cet axe.

La coupelle C, dont la section transversale est visible sur Fig.2, est formée par une portion de cylindre de révolution dont l'axe géométrique est parallèle à Ox, éventuellement confondu avec cet axe. L'étendue angulaire de la section transversale de la coupelle C est égale à 180°- α .

L'angle α, dans l'exemple considéré, est égal à 15° et correspond à l'angle défini réglementairement pour le bord incliné montant de la coupure du faisceau de croisement. Lorsque la lampe L est utilisée classiquement pour assurer les fonctions route et feu de croisement, elle est orientée autour de l'axe Ox de telle sorte qu'un bord de la coupelle se trouve dans le plan horizontal de l'axe Ox, tandis que l'autre bord se trouve sur un rayon incliné de 15° au-dessous de ce plan.

Dans le cas du projecteur conforme à l'invention, la lampe L est orientée comme montré sur Fig.2 de telle sorte que la coupelle C soit symétrique par rapport au plan vertical V passant par l'axe optique. La coupelle C laisse passer la lumière symétriquement de chaque côté du plan V sur une étendue angulaire A égale à 90° + α/2 soit, dans l'exemple considéré, 97,5°.

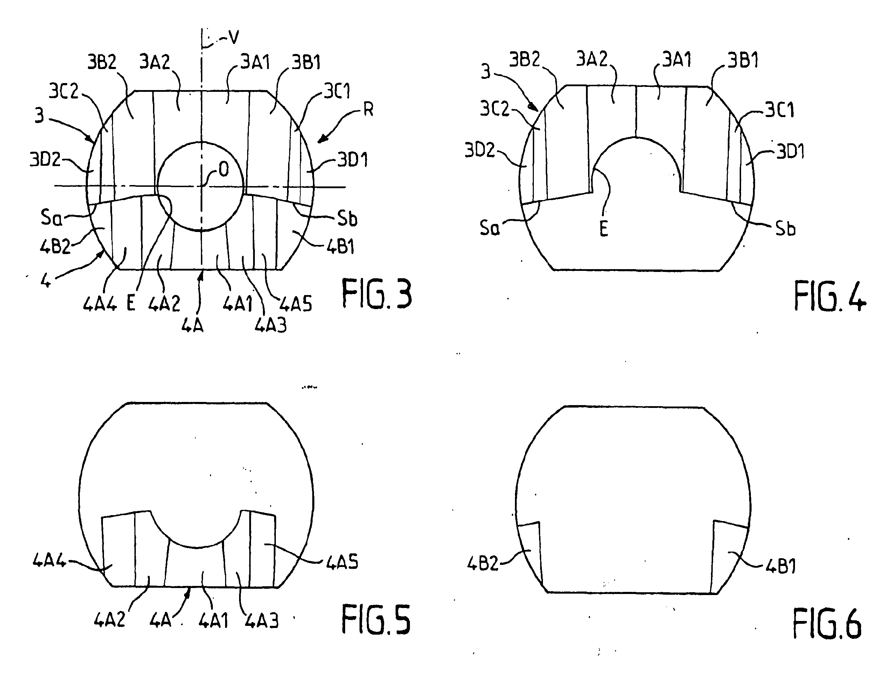

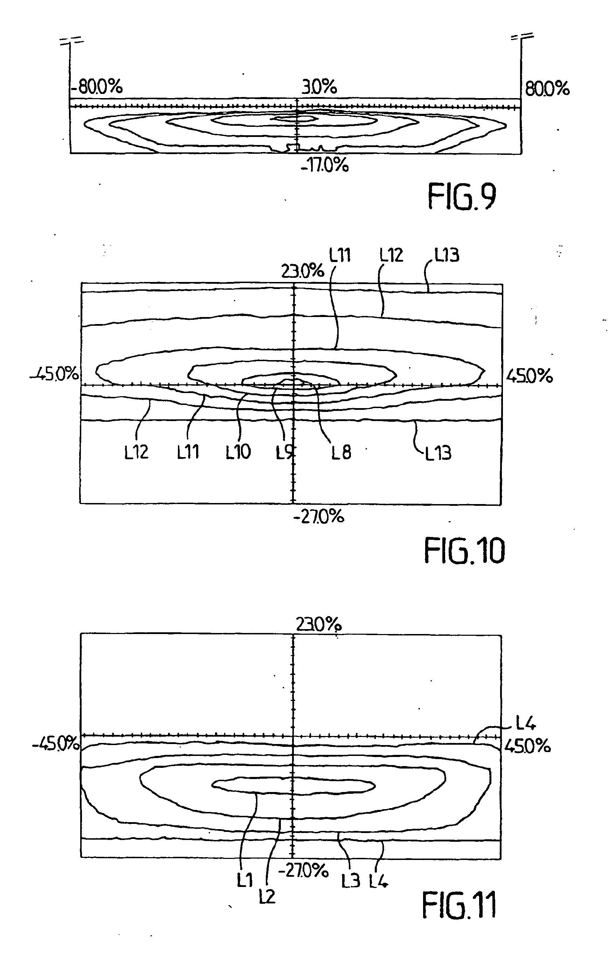

Le projecteur P comprend un réflecteur R qui comporte une première zone réfléchissante 3 constituée par la partie haute du réflecteur, c'est-à-dire la partie essentiellement située au-dessus du plan horizontal passant par l'axe Ox. Cette partie haute 3, qui sera décrite plus en détail avec référence aux Figs.3 et 4, est prévue essentiellement pour coopérer avec le premier filament 1 et produire un premier type de faisceau lumineux. Dans l'exemple considéré il s'agit d'un faisceau antibrouillard dont la photométrie dans un plan vertical perpendiculaire à l'axe optique et à une distance donnée du projecteur, est représentée sur Fig.9. Le foyer F de la partie haute 3 est situé sur l'axe optique Ox en arrière du filament 1. Le foyer F peut être situé à l'extrémité avant du filament 2, comme illustré sur Fig. 1.

Le réflecteur R comporte une seconde zone 4 formée par une partie basse située au-dessous du plan horizontal passant par l'axe optique, et dans l'ombre de la coupelle C vis-à-vis du filament 1. Cette partie basse 4 est prévue pour coopérer avec le second filament 2. L'extrémité avant du filament 2 est située en arrière de l'extrémité arrière du filament 1 à une distance d, par exemple de l'ordre de 1,7 mm pour une lampe de type H4. La partie basse 4 du réflecteur est constituée de plusieurs zones comme illustré sur Figs.3, 5 et 6, et sera décrite plus en détail à propos de ces figures.

La séparation entre la partie haute 3 et la partie basse 4 des zones du réflecteur R est formée par deux lignes Sa, Sb, inclinées, depuis la partie centrale vers l'extérieur, d'un angle supérieur à α/2 vers le bas par rapport à l'horizontale (10° dans le cas présent).

Le réflecteur R comporte dans sa partie centrale, une ouverture circulaire E pour recevoir un porte-lampe.

Le projecteur P est fermé, vers l'avant, par une glace transparente G.

Selon l'invention, l'un des filaments de la lampe, dans l'exemple considéré le deuxième filament 2, est prévu pour fonctionner sous une puissance électrique réduite relativement à celle du premier filament 1 et est affecté à la fonction DRL (feu diurne).

Dans le cas d'une lampe L de type H4 dont les deux filaments 1 et 2 ont sensiblement la même puissance électrique, le fonctionnement du deuxième filament 2 sous puissance réduite est obtenu à l'aide d'un circuit électrique 5 réduisant la tension d'alimentation du filament 2, qui est ainsi sous-volté. A titre d'exemple non limitatif, un filament 2 prévu pour fonctionner sous tension nominale de 12 volts, sera alimenté par le circuit 5 sous une tension de 7 volts.

En variante, il est possible de prévoir et d'utiliser une lampe à deux filaments, dont un filament affecté à la fonction DRL a une puissance, sous la tension nominale par exemple de 12 volts, inférieure à celle de l'autre filament et correspondant à la puissance souhaitée pour la photométrie DRL.

La partie basse 4 du réflecteur se décompose en une zone centrale 4A illustrée sur Fig.5 et en deux zones latérales extrêmes 4B1, 4B2 illustrées sur Fig.3.

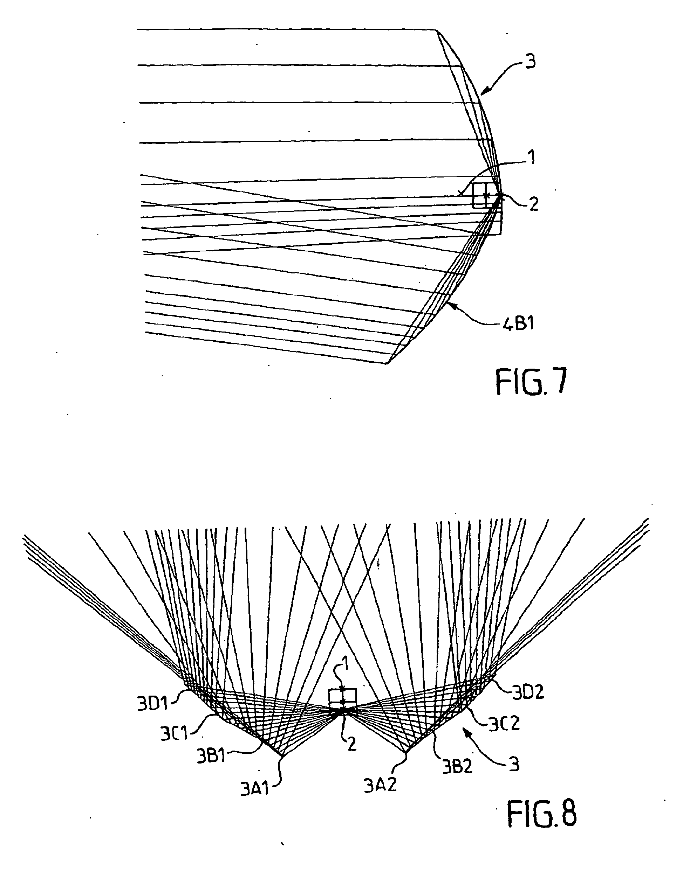

La partie haute 3 du réflecteur, comme montré sur Figs.3 et 4 se compose de plusieurs facettes symétriques par rapport au plan vertical V passant par l'axe optique. Chaque facette a une surface courbe adaptée à la partie du faisceau qu'elle doit produire en coopération avec l'un des filaments. De chaque côté du plan vertical V la partie haute 3 comprend quatre facettes respectivement 3A1, 3B1, 3C1, 3D1 sur la droite du plan V, et 3A2, 3B2, 3C2, 3D2 sur la gauche . Une ligne de transition entre chaque facette correspond à un changement d'inclinaison comme illustré sur Fig. 8, mais sans qu'il y ait un décrochement en passant d'une facette à l'autre.

La zone 4A de la partie basse se compose d'une partie centrale 4A1 de deux parties immédiatement voisines 4A2 et 4A3 et de deux autres parties extérieures 4A4 et 4A5. Les parties extrêmes latérales 4B2, 4B1 viennent encadrer les facettes 4A4 et 4A5.

La coopération du filament 2 avec la partie haute 3 est illustrée par le schéma de marche des rayons lumineux sur Fig.8 selon une coupe horizontale passant par l'axe optique de la zone inférieure de la partie haute 3.

La photométrie produite par la zone 4A de la partie basse en coopérant avec le filament 2 est illustrée par les courbes isolux de Fig. 11. L'axe horizontal correspond au plan horizontal passant par l'axe optique du réflecteur. Les graduations en % (pour cent) sur cet axe horizontal correspondent à la tangente de l'angle formé entre l'axe optique et une direction horizontale passant par le foyer . L'axe vertical correspond à la trace du plan vertical passant par l'axe optique sur le plan de la photométrie. Les graduations en % (pour cent) de cet axe vertical correspondent à la tangente de l'angle formé entre le plan horizontal passant par l'axe optique et une direction située dans un plan vertical et passant par le foyer du réflecteur.

On voit, d'après Fig.11 que les courbes isolux du faisceau produit par la zone 4A du réflecteur en coopération avec le filament 2, sont situées au-dessous du plan horizontal passant par l'axe optique et sont sensiblement symétriques par rapport à l'axe vertical. Les niveaux d'intensité lumineuse des différentes courbes exprimés en lux sont donnés ci-après. La courbe centrale fermée L1 correspond à un niveau de 0.5 lux, la courbe suivante L2 à un niveau de 0.250 lux, l'avant-dernière courbe L3 à un niveau de 0.1 lux et la dernière courbe L4, constituée de deux parties l'une basse et l'une haute, à un niveau de 0.01 lux.

Les deux zones latérales 4B1 et 4B2 de la partie basse sont prévues pour renvoyer une partie du faisceau lumineux vers le haut comme illustré sur Fig.7, de préférence sous un angle de 10° par rapport à l'horizontale pour l'une des zones, par exemple la zone 4B1, et sous un angle de 5° par rapport à l'horizontale pour l'autre zone 4B2.

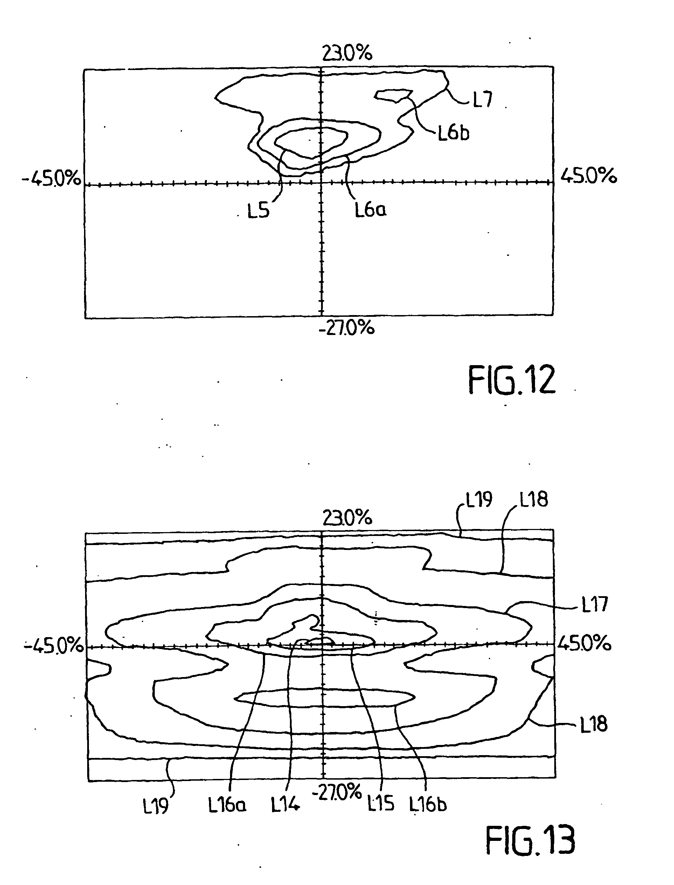

La photométrie produite par les zones 4B1 et 4B2 en coopération avec le filament 2 est illustrée sur Fig.12. Les courbes isolux sont situées au-dessus du plan horizontal passant par l'axe optique et s'étendent de part et d'autre du plan vertical passant par cet axe optique. La courbe centrale L5 correspond à un niveau de 0.25 lux , les courbes L6a et L6b à 0.1 lux et la courbe extérieure L7 à 0.010 lux.

Une partie du faisceau DRL est assurée par la coopération du filament 2 avec la partie haute 3 du réflecteur. La photométrie de cette partie est illustrée sur Fig.10. Les courbes isolux sont situées de part et d'autre du plan vertical passant par l'axe optique et de part et d'autre du plan horizontal, en étant toutefois plus serrées au-dessous de ce plan horizontal et plus écartées au-dessus suivant la direction verticale. La courbe centrale L8 la plus étroite correspond à un niveau de 1 lux et les courbes concentriques successives L9, L10, L11, L12 et L13 correspondent respectivement à 0.75, 0.5, 0.250, 0.1 et 0.01 lux.

La photométrie du faisceau DRL résultant de la composition des photométries des Fig.10, 11 et 12 est illustrée sur Fig.13. De la zone centrale, vers l'extérieur, les courbes L14, L15, (L16a, L16b), L17, L18, L19, correspondent à des niveaux respectifs de 1 lux, 0.75 lux, 0.5 lux, 0.250 lux , 0.1 lux et 0.01 lux.

Ainsi, selon l'invention, la partie haute 3 du réflecteur ou miroir est optimisée pour satisfaire la fonction antibrouillard (Fig.9). Cette partie haute 3 est cependant conçue de manière à ce que, utilisée avec le filament 2 (Fig.10), elle complète le faisceau DRL sans conduire à des valeurs supérieures au maximum autorisé.

La partie basse 4 du miroir, qui se trouve dans l'ombre de la coupelle C pour le filament 1 est optimisée pour le filament 2 afin de satisfaire la fonction DRL selon les schémas des Fig. 11 et 12.

La partie haute 3 du miroir, dans l'exemple considéré, étant optimisée pour remplir à la fois la photométrie de l'antibrouillard (Fig.9) mais aussi une partie de la fonction DRL (Fig.10) permet de réduire les dimensions du réflecteur R.

La description a été effectuée à propos d'un projecteur bifonction antibrouillard-DRL.

Dans le cas où la lampe L est une lampe du type H4, le sous-voltage du filament 2 permet une augmentation de la durée de vie de ce filament.

Il est à noter que l'invention peut être réalisée avec toute lampe à deux filaments dont l'un est équipé d'un masque ou coupelle faisant de l'ombre sur une partie du miroir.

La glace G du projecteur peut être entièrement lisse, la photométrie souhaitée étant assurée par les différentes parties du réflecteur R.

L'invention a également pour objet le véhicule automobile équipé d'au moins un des projecteurs décrits plus haut.

## Revendications

1. Projecteur de véhicule automobile comprenant : une lampe (L) à deux filaments, à savoir un premier filament (1) équipé d'une coupelle (C) qui ne laisse passer la lumière que suivant une étendue angulaire donnée, et un second filament (2) libre de toute coupelle; un réflecteur (R) avec une première zone réfléchissante (3) prévue essentiellement pour coopérer avec le premier filament (1) et produire un premier type de faisceau lumineux, et une seconde zone réfléchissante (4), située dans l'ombre de la coupelle (C), prévue pour coopérer avec le second filament (2) et pour former, éventuellement avec la première zone réfléchissante, un deuxième type de faisceau lumineux; et une glace (G) de fermeture du réflecteur, le premier filament (1) avec coupelle étant affecté à la fonction antibrouillard et la partie haute (3) du réflecteur étant conçue pour cette fonction, **caractérisé en ce que** le second filament (2) de la lampe est prévu pour fonctionner sous une puissance électrique réduite relativement à celle de l'autre filament (1) et est affecté à la fonction feu diurne (DRL), **en ce que** le réflecteur (R) est conçu pour assurer avec la zone seconde, réfléchissante (4) affectée à ce filament (2) de puissance réduite au moins une partie de la photométrie DRL, et **en ce que** le projecteur (P) a une surface éclairante au moins égale à celle nécessaire pour la fonction DRL, la partie basse (4) du réflecteur étant conçue pour la fonction DRL et comprenant deux zones latérales d'extrémité (4B1, 4B2) prévues pour renvoyer la lumière vers le haut et vers le centre du faisceau DRL.

2. Projecteur selon la revendication 1, **caractérisé par le fait que** la zone réfléchissante (3) du réflecteur affectée à la fonction autre que DRL est conçue de manière à ne pas conduire à des valeurs supérieures au maximum autorisé en DRL.

3. Projecteur selon la revendication 1 ou 2, équipé d'une lampe à deux filaments qui ont sensiblement la même puissance sous une même tension **caractérisé par le fait que** le filament (2) affecté à la fonction DRL est sous-volté.

4. Projecteur selon la revendication 3, **caractérisé par le fait qu'**il comporte un circuit (5) pour réduire la tension d'alimentation du filament (2) affecté à la fonction DRL.

5. Projecteur selon la revendication 1 ou 2, **caractérisé par le fait qu'**il comporte une lampe à deux filaments conçue de telle sorte que le filament (2) servant à la fonction DRL a une puissance réduite sous la tension nominale, qui est celle appliquée à l'autre filament (1).

6. Projecteur selon l'une des revendications précédentes, **caractérisé par le fait que** le filament (2) pour la fonction DRL fonctionne sous une puissance au plus égale au tiers de la puissance de l'autre filament (1).

7. Projecteur selon l'une des revendications précédentes, **caractérisé par le fait que** la partie haute (3) du réflecteur est prévue pour remplir à la fois la photométrie de l'antibrouillard et une partie de la fonction DRL, essentiellement celle située au-dessus du plan horizontal, la partie basse (4) du réflecteur étant optimisée pour remplir la photométrie complémentaire de la fonction DRL.

8. Projecteur selon l'une des revendications précédentes, **caractérisé par le fait que** la glace de fermeture (G) est lisse.

9. véhicule automobile **caractérisé en ce qu'**il est équipé d'au moins un projecteur selon l'une au moins des revendications précédentes.

## Claims

1. Motor vehicle headlight comprising: a bulb (L) with two filaments, namely a first filament (1) equipped with a cup (C) which allows light to pass only within a given angular sector, and a second filament (2) without any cup; a reflector (R) with a first reflecting area (3) designed essentially to cooperate with the first filament (1) and produce a first type of light beam, and a second reflecting area (4) located in the shadow of the cup (C), designed to cooperate with the second filament (2) and to form, possibly with the first reflecting area, a second type of light beam; and a glass (G) closing the reflector, the first filament (1) with a cup being assigned to the fog-light function and the top part (3) of the reflector being designed for this function, **characterised in that** the second filament (2) of the bulb is designed to function under reduced electrical power compared with that of the other filament (1) and is assigned to the daytime light function (DRL), **in that** the reflector (R) is designed to provide at least part of the DRL lighting power with the second reflecting area (4) assigned to this reduced-power filament (2), and **in that** the headlight (P) has a lighting surface at least equal to that necessary for the DRL function, the bottom part (4) of the reflector being designed for the DRL function, and comprising two lateral end areas (4B1, 4B2) designed to reflect light upwards and towards the centre of the DRL beam.

2. Headlight according to claim 1, **characterised by** the fact that the reflecting area (3) of the reflector assigned to the function other than DRL is designed so as not to lead to values higher than the maximum permitted for DRL.

3. Headlight according to claim 1 or 2, equipped with a bulb with two filaments which have roughly the same power at the same voltage, **characterised by** the fact that the filament (2) assigned to the DRL function is undervolted.

4. Headlight according to claim 3, **characterised by** the fact that it comprises a circuit (5) to reduce the supply voltage of the filament (2) assigned to the DRL function.

5. Headlight according to claim 1 or 2, **characterised by** the fact that it comprises a bulb with two filaments designed in such a way that the filament (2) used for the DRL function has a reduced power at the rated voltage, which is that applied to the other filament (1).

6. Headlight according to one of the preceding claims, **characterised by** the fact that the filament (2) for the DRL function functions at a power at most equal to one third of the power of the other filament (1).

7. Headlight according to one of the above claims, **characterised by** the fact that the top part (3) of the reflector is designed both to provide the lighting capacity of the fog light and to perform part of the DRL function, essentially that located above the horizontal plane, the bottom part (4) of the reflector being optimised to provide the additional lighting capacity of the DRL function.

8. Headlight according to one of the preceding claims, **characterised by** the fact that the closing glass (G) is smooth.

9. Motor vehicle, **characterised by** the fact that it is equipped with a least one headlight according to at least one of the preceding claims.

## Patentansprüche

1. Kraftfahrzeugscheinwerfer, mit: einer Lampe (L) mit zwei Glühfäden, nämlich einem ersten Glühfaden (1), der mit einer Blendwanne (C) versehen ist, die das Licht nur in einem vorgegebenen Winkelbereich passieren lässt, und einem zweiten Glühfaden (2) ohne Blendwanne; einem Reflektor (R) mit einem ersten Reflexionsbereich (3), der im Wesentlichen dazu vorgesehen ist, mit dem ersten Glühfaden (1) zusammenzuwirken und einen ersten Lichtbündeltyp zu erzeugen, und einem zweiten, im Schatten der Blendwanne (C) gelegenen Reflexionsbereich (4), der dazu vorgesehen ist, mit dem zweiten Glühfaden (2) zusammenzuwirken und gegebenenfalls mit dem ersten Reflexionsbereich einen zweiten Lichtbündeltyp zu bilden; und einer Reflektorabschlussscheibe (G), wobei der erste Glühfaden (1) mit Blendwanne der Nebellichtfunktion zugeordnet ist und der obere Teil (3) des Reflektors für diese Funktion ausgelegt ist,
**dadurch gekennzeichnet, dass** der zweite Glühfaden (2) der Lampe dazu vorgesehen ist, mit einer elektrischen Leistung betrieben zu werden, die gegenüber der des anderen Glühfadens (1) verringert ist und der Tagfahrlichtfunktion (DRL) zugeordnet ist, dass der Reflektor (R) so ausgelegt ist, dass mit dem zweiten Reflexionsbereich (4), der dem Glühfaden (2) mit geringerer Leistung zugeordnet ist, wenigstens ein Teil der DRL-Lichtverteilung gewährleistet wird, und dass der Scheinwerfer (P) eine Leuchtfläche hat, die mindestens der entspricht, die für die DRL-Funktion erforderlich ist, wobei der untere Teil (4) des Reflektors für die DRL-Funktion ausgelegt ist und zwei äußere Seitenbereiche (4B1, 4B2) aufweist, die dazu vorgesehen sind, das Licht nach oben und zur Mitte des DRL-Lichtbündels zu reflektieren.

2. Scheinwerfer nach Anspruch 1,
**dadurch gekennzeichnet, dass** der einer anderen Lichtfunktion als dem DRL zugeordnete Reflexionsbereich (3) des Reflektors derart ausgelegt ist, dass nicht Werte erreicht werden, die über dem Höchstwert liegen, der für das DRL zulässig ist.

3. Scheinwerfer nach Anspruch 1 oder 2, der mit einer Lampe mit zwei Glühfäden ausgestattet ist, die bei gleicher Spannung im Wesentlichen die gleiche Leistung haben,
**dadurch gekennzeichnet, dass** der der DRL-Funktion zugeordnete Glühfaden (2) mit Unterspannung betrieben wird.

4. Scheinwerfer nach Anspruch 3,
**dadurch gekennzeichnet, dass** er einen Schaltkreis (5) zum Verringern der Versorgungsspannung des der DRL-Funktion zugeordneten Glühfadens (2) umfasst.

5. Scheinwerfer nach Anspruch 1 oder 2,
**dadurch gekennzeichnet, dass** er eine Zweifaden-Glühlampe umfasst, die derart ausgelegt ist, dass der für die DRL-Funktion vorgesehene Glühfaden (2) bei der Nominalspannung, die an den anderen Glühfaden (1) angelegt wird, eine geringere Leistung hat.

6. Scheinwerfer nach einem der vorhergehenden Ansprüche,
**dadurch gekennzeichnet, dass** der Glühfaden (2) für die DRL-Funktion mit einer Leistung betrieben wird, die höchstens einem Drittel der Leistung des anderen Glühfadens (1) entspricht.

7. Scheinwerfer nach einem der vorhergehenden Ansprüche,
**dadurch gekennzeichnet, dass** der obere Teil (3) des Reflektors dazu vorgesehen ist, sowohl die Lichtverteilung des Nebellichts als auch einen Teil der DRL-Funktion zu bewirken, das heißt im Wesentlichen den Teil, der über der horizontalen Ebene liegt, wobei der untere Teil (4) des Reflektors zum Ausfüllen der übrigen Lichtverteilung der DRL-Funktion optimiert ist.

8. Scheinwerfer nach einem der vorhergehenden Ansprüche,
**dadurch gekennzeichnet, dass** die Abschlussscheibe (G) glatt ist.

9. Kraftfahrzeug,
**dadurch gekennzeichnet, dass** es mit wenigstens einem Scheinwerfer nach zumindest einem der vorhergehenden Ansprüche ausgestattet ist.
